# EUROPEAN PATENT APPLICATION

(11) **EP 3 070 284 A1**
(43) Date of publication of application: **21.09.2016**
(21) Application number: 16158504.7
(22) Date of filing: 03.03.2016
(51) Int. Cl.: F01N 3/10, F01N 3/22, F01N 3/30, F01N 3/32, F01N 9/00, F01N 11/00, F01N 13/00

(54) **SYSTEMS AND METHODS FOR MONITORING THE HEALTH OF A MID-BED OXIDANT INJECTION SYSTEM**

(30) Priority: 17.03.2015 US 201514660135
(71) Applicant: General Electric Company, Schenectady, NY 12345 (US)
(72) Inventor: DEVARAKONDA, Maruthi Narasinga Rao, Waukesha, WI Wisconsin 53188 (US)
(74) Representative: Williams, Andrew Richard

(57) **Abstract**

A exhaust aftertreatment system (10) includes a controller (14) programmed to determine an oxidation state of a three-way catalyst (TWC) assembly (22) based on a first signal representative of a measured oxygen (O₂) storage of the TWC assembly (22) received from a radio frequency (RF) probe (52) disposed within the TWC assembly (22), to determine whether a temperature of a fluid flowing into an ammonia slip catalyst (ASC) assembly (24) is within a desired temperature operating range based on a second signal representative of the temperature of the fluid adjacent an inlet of the ASC assembly (24), to determine whether a concentration of nitrogen oxides (NO_{X}) in the fluid exiting an outlet of the ASC assembly (24) is within desired limits based on a third signal representative of the concentration of NO_{X} in the fluid, and to determine whether to perform diagnostics on a component of the system (10) based at least on the first, second, and third signals.

## Description

The subject matter disclosed herein relates to an exhaust aftertreatment system for an internal combustion engine and, more specifically, to monitoring the health of a mid-bed oxidant injection system of the exhaust aftertreatment system.

Engines (e.g., internal combustion engines such as reciprocating engines or gas turbines) combust a mixture of fuel and air to generate combustion gases that apply a driving force to a component of the engine (e.g., to move a piston or drive a turbine). Subsequently, the combustion gases exit the engine as an exhaust, which may be subject to exhaust treatment (e.g., aftertreatment) systems that include one or more catalytic converters (e.g., three-way catalyst (TWC) assembly, ammonia slip catalyst (ASC) assembly, etc.) to reduce the emissions of nitrogen oxides (NO_{X}), hydrocarbons (HC), carbon monoxide (CO), and other emissions. However, if the health of one or more components of the exhaust treatment system is not closely monitored, over time the effectiveness of the catalysts at reducing emissions may decrease.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In accordance with a first embodiment, a system includes an exhaust aftertreatment system configured to treat emissions from a combustion engine. The exhaust aftertreatment system includes a TWC assembly having a first outlet, an ASC assembly configured to receive a fluid from the TWC assembly, wherein the ASC assembly has an inlet and a second outlet, and a fluid conduit disposed between the TWC assembly and the ASC assembly and configured to transfer the fluid from the TWC assembly to the ASC assembly. The exhaust aftertreatment system also includes an oxidant injection system coupled to the fluid conduit and configured to inject oxidant into the fluid conduit upstream of the inlet of the ASC assembly to provide sufficient oxidant in the fluid flowing into the inlet of the ASC assembly to enable catalytic activity in the ASC assembly. The exhaust aftertreatment system further includes a first radio frequency (RF) probe disposed within the TWC assembly and configured to measure oxygen (O₂) storage of the TWC assembly, at least one temperature sensor disposed downstream of a location of oxidant injection into the fluid conduit by the oxidant injection system and upstream of the inlet of the ASC assembly, wherein the at least one temperature sensor is configured to measure a temperature of the fluid adjacent the inlet of the ASC assembly, and at least one NOₓ sensor disposed downstream of the inlet of the ASC assembly and configured to measure a concentration of NO_{X} in the fluid exiting the outlet of the ASC assembly. The exhaust aftertreatment system still further includes a controller programmed to receive a first signal representative of a measured O₂ storage of the TWC assembly from the first RF probe, to receive a second signal representative of the temperature of the fluid adjacent the inlet of the ASC assembly, to receive a third signal representative of the concentration of NOₓ in the fluid exiting the ASC assembly, and to determine whether to perform diagnostics on a component of the exhaust aftertreatment system based at least on the first, second, and third signals.

In accordance with a second embodiment, a system includes a controller programmed to determine an operational state of an exhaust aftertreatment system coupled to a combustion engine, wherein the exhaust aftertreatment system comprises a TWC assembly fluidly coupled to an ASC assembly located downstream of the TWC assembly. The controller is also programmed to determine an oxidation state of the TWC assembly of the exhaust aftertreatment system based on a first signal representative of a measured O₂ storage of the TWC assembly received from a first RF probe disposed within the TWC assembly, to determine whether a temperature of a fluid flowing into the ASC assembly is within a desired temperature operating range based on a second signal representative of the temperature of the fluid adjacent an inlet of the ASC assembly received from a temperature sensor, to determine whether a concentration of NOₓ in the fluid exiting an outlet of the ASC assembly is within desired limits based on a third signal representative of the concentration of NO_{X} in the fluid exiting the ASC assembly received from a NO_{X} sensor, and to determine whether to perform diagnostics on a component of the exhaust aftertreatment system based at least on the first, second, and third signals.

In accordance with a third embodiment, a method for monitoring an operational state of an exhaust aftertreatment system coupled to a combustion engine is provided, wherein the exhaust aftertreatment system includes a TWC assembly fluidly coupled to an ASC assembly located downstream of the TWC assembly. The method includes receiving, at a controller, a first signal representative of a measured O₂ storage of the TWC assembly from a first RF probe disposed within the TWC assembly. The method also includes receiving, at the controller, a second signal representative of a temperature of a fluid flowing into an inlet of the ASC assembly from a temperature sensor. The method further includes receiving, at the controller, a third signal representative of a concentration of NOₓ in the fluid exiting the ASC assembly from a NOₓ sensor. The method still further includes determining, via the controller, whether to perform diagnostics on a component of the exhaust aftertreatment system based at least on the first, second, and third signals. The method yet further includes receiving, at the controller, a fourth signal representative of a concentration of ammonia (NH₃) in the fluid within the ASC assembly. The method even further includes, if the controller determines to perform diagnostics on the component, determining, via the controller, the component of the exhaust aftertreatment system to perform diagnostics on based on the fourth signal.

Various features, aspects, and advantages of the present invention will become better understood when the following detailed description is read with reference to the accompanying drawings in which like characters represent like parts throughout the drawings, wherein:
FIG. 1 is a schematic diagram of an embodiment of an exhaust treatment (e.g., aftertreatment) system coupled to an engine; and
FIG. 2 is a flow chart of an embodiment of a computer-implemented method for monitoring the health of a mid-bed oxidant injection system coupled to an engine.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to systems and methods for monitoring the health of an oxidant injection system (e.g., mid-bed air injection system) coupled to a series of catalyst assemblies or catalytic converters (e.g., TWC assembly, ASC assembly, etc.) coupled to a combustion engine (e.g., reciprocating internal combustion engine or gas turbine engine). In particular, embodiments of the present disclosure include an aftertreatment system (e.g., exhaust treatment) system configured to couple to the combustion engine and to treat emissions (e.g., in the engine exhaust) from the combustion engine (e.g., NOₓ, HC, CO, etc.). The aftertreatment system may include catalyst based systems, chemical injection systems, or other types. In particular, the aftertreatment system may include a TWC assembly fluidly coupled (e.g., via a fluid conduit) to an ASC assembly and an oxidant injection system configured to inject an oxidant (e.g., air, O₂, oxygen-enriched air, or oxygen-reduced air) into a fluid (e.g., exhaust treated by TWC assembly) within the fluid conduit. The disclosed embodiments include determining an oxidative state (e.g., O₂ storage) of the TWC assembly via one or more RF probes. If the combustion engine is operated under rich enough conditions, the O₂ storage of the TWC assembly should be zero or near zero. If the O₂ storage of the TWC assembly is zero or near zero, disclosed embodiments include measuring a temperature of the fluid prior to flowing into the ASC assembly but downstream of a location of oxidant injection by the oxidant injection system and adjusting the temperature of the fluid (e.g., adjacent the ASC assembly) so that the temperature is within a desired temperature operating range (e.g., 400-510 °C) to maximize catalytic activity within the ASC assembly. If the temperature of the fluid adjacent the ASC assembly is within the desired temperature operating range, disclosed embodiments include determining whether a concentration of NO_{X} in the fluid (e.g., treated by both the TWC assembly and the ASC assembly) exiting the ASC assembly is within desired limits (e.g., within a desired range or below a desired threshold). If the concentration of NO_{X} in the fluid exiting the ASC assembly is not within the desired limits, disclosed embodiments include determining an NH₃ concentration in the fluid within the ASC assembly and deciding which component of the exhaust aftertreatment system to perform diagnostics on based on the determined NH₃ concentration in the fluid within the ASC assembly. Monitoring the health of the oxidant injection system and/or exhaust aftertreatment system, via the disclosed techniques, enables operation of the combustion engine to remain within emissions compliance for an extended period of time. In addition, maintenance to components of the exhaust aftertreatment system may be minimized. Further, the disclosed embodiments provide an on-board diagnostics capability.

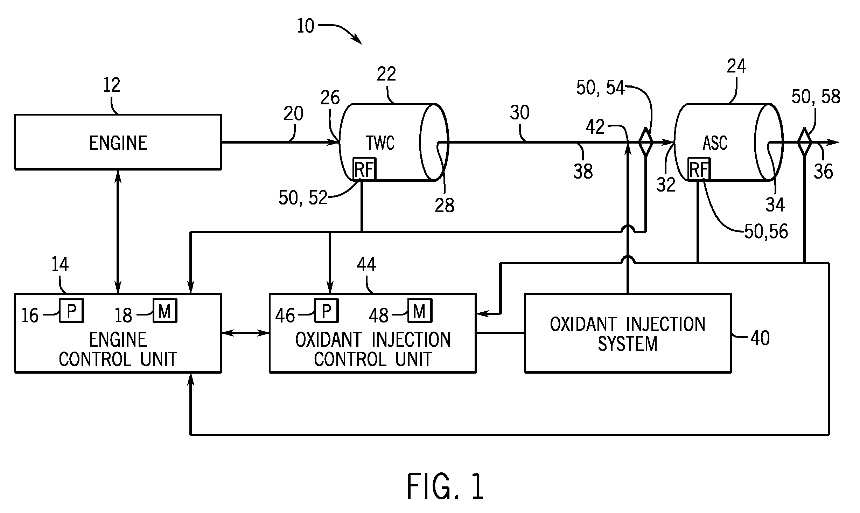

Turning now to the drawings and referring to FIG. 1, a schematic diagram of an exhaust treatment system 10 coupled to an engine 12 is illustrated. As described in detail below, the disclosed exhaust treatment system 10 monitors the health (e.g., ability to reduce emissions) of the exhaust treatment system 10 and/or components of the system (e.g., oxidant injection system 40, ASC assembly 24, etc.). The engine 12 may include an internal combustion engine such as a reciprocating engine (e.g., multi-stroke engine such as two-stroke engine, four-stroke engine, six-stroke engine, etc.) or a gas turbine engine. The engine 12 may operate on a variety fuels (e.g., natural gas, diesel, syngas, gasoline, blends of fuel (e.g., methane, propane, ethane, etc.), etc.). The engine 12 may operate as a rich-burn engine. The engine 12 may be part of a power generation system that generates power ranging from 10 kW to 10 MW. In some embodiments, the engine 12 may operate at less than approximately 1800 revolutions per minute (RPM). In some embodiments, the engine 12 may operate at less than approximately 2000 RPM, 1900 RPM, 1700 RPM, 1600 RPM, 1500 RPM, 1400 RPM, 1300 RPM, 1200 RPM, 1000 RPM, or 900 RPM. In some embodiments, the engine 12 may operate between approximately 800-2000 RPM, 900-1800 RPM, or 1000-1600 RPM. In some embodiments, the engine 12 may operate at approximately 1800 RPM, 1500 RPM, 1200 RPM, 1000 RPM, or 900 RPM. Exemplary engines 12 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

The engine 12 is coupled to an engine control unit (e.g., controller) 14 that controls and monitors the operations of the engine 12. For example, the engine control unit 14 (in conjunction with or separately from an oxidant injection control unit 44) controls and monitors the operations of the engine 12. For example, the engine control unit regulates or adjusts an oxidant-fuel ratio (e.g., air-fuel ratio) of the engine 12 (e.g., via one or more air-fuel ratio (AFR) regulators coupled to the engine 12 such as a fuel system, carburetor, fuel injector, fuel pass regulator, any system including one or more of these, or any combination thereof.). The AFR is the mass ratio of air to fuel. The engine control unit 14 includes processing circuitry (e.g., processor 16) and memory circuitry (e.g., memory 18). The processor 16 may include multiple microprocessors, one or more "general-purpose" microprocessors, one or more special-purpose microprocessors, and/or one or more application specific integrated circuits (ASICS), system-on-chip (SoC) device, or some other processor configuration. For example, the processor 16 may include one or more reduced instruction set (RISC) processors or complex instruction set (CISC) processors. The processor 16 may execute instructions to carry out the operation of the engine 12 and/or aftertreatment system 10. These instructions may be encoded in programs or code stored in a tangible non-transitory computer-readable medium (e.g., an optical disc, solid state device, chip, firmware) such as the memory 18. In certain embodiments, the memory 18 may be wholly or partially removable from the ECU 14.

During operation, the engine 12 generates combustion gases 20 used to apply a driving force to a component of the engine 12 (e.g., one or more pistons reciprocating in cylinders or one more turbines). The combustion gases 20 subsequently exit the engine 12 as an exhaust 20, which includes a variety of emissions (e.g., NOₓ, HC, CO, etc.). The exhaust treatment system 10 treats these emissions to generate milder emissions (carbon dioxide (CO₂) water, etc). As depicted, the exhaust treatment system 10 includes catalytic converters or catalyst assemblies, such as the first catalyst assembly 22 (e.g., TWC assembly) and the second catalyst assembly 24 (e.g., ASC assembly). In certain embodiments, the first and second catalyst assemblies 22, 24 may be housed within a single housing. In embodiments that include the TWC assembly 22 and the ASC assembly 24, the engine 12 may be operated as a rich-burn engine (e.g., equivalence ratio (i.e., ratio of actual AFR to stoichiometric AFR), or lambda (λ), value of less than 1.0 such as approximately 0.999, 0.998, 0.997, 0.996, 0.995, 0.994, 0.993, 0.980, 0.970, 0.960, 0.950, or any other value less than 1.0) to maximize the catalytic activity in both the TWC assembly 22 and the ASC assembly 24. In certain embodiments, the engine 12 may be operated at a rich enough λ or AFR to enable the O₂ storage of the TWC assembly 22 be zero or near zero to enable monitoring of the operative state of other components (e.g., oxidant injection system 40, ASC assembly 24, etc.) of the exhaust treatment system 10. The TWC assembly 22, via its catalytic activity, reduces NO_{X} via multiple reactions. For example, NO_{X} may be reduced via CO to generate N₂ and CO₂, NO_{X} may be reduced via H₂ to generate NH₃ and water, and NO_{X} may be reduced via a hydrocarbon (e.g., C₃H₆) to generate N₂, CO₂, and water. The TWC assembly 22 also oxidizes CO to CO₂, and oxidizes unburnt HC to CO₂ and water. A by-product of the reduction of NO_{X} in the TWC assembly 22 can be the emission of NH; (e.g., due to the reaction of NO_{X} and H₂). In certain embodiments, instead of the TWC assembly 22, any catalytic converter that reduces NO_{X} may be utilized. The ASC assembly 24, via its catalytic activity (e.g., at zeolite sites), selectively reduces the NH₃ to N₂. In certain embodiments, the ASC assembly 24 also oxidizes CO to CO₂. The ASC assembly 24 includes a catalyst operating window between upper and lower temperature thresholds, such as between approximately 400-510 °C. The operating window represents a temperature where all of the NH₃ may be converted to N₂ and not oxidized to NO_{X}.

The TWC assembly 22 includes an inlet 26 to receive the exhaust 20 from the engine 12 and an outlet 28 to discharge a fluid 30 (e.g., treated engine exhaust). The ASC assembly 24 includes an inlet 32 to receive the fluid 30 (e.g., including the treated engine exhaust and/or injected oxidant (e.g., air, O₂, oxygen-enriched air, or oxygen-reduced air) and an outlet 34 to discharge an additionally treated fluid 36. A fluid conduit 38 is disposed between the TWC assembly 22 and the ASC assembly 24. Specifically, the fluid conduit 38 is coupled to the outlet 28 of the TWC assembly 22 and the inlet 32 of the ASC assembly 24, thus, coupling both assemblies 22, 24 to enable fluid communication between them. The fluid conduit 38 enables the flow or transfer of the fluid 30 from the TWC assembly 22 to the ASC assembly 24.

As depicted, an oxidant injection system 40 (e.g., mid-bed air injection system) is coupled to the fluid conduit 38. The oxidant injection system 40 injects oxidant (e.g., air, O₂, oxygen-enriched air, or oxygen-reduced air) into the fluid 30 within the fluid conduit 38 at a point or location 42 downstream of the outlet 28 of the TWC assembly 22 and upstream of the inlet 32 of the ASC assembly 24. In certain embodiments, oxidant injection via the oxidant injection system 40 may be actively driven via a pump or injector. In other embodiments, oxidant injection via the oxidant injection system 40 may occur via passive entrainment. The oxidant injection system 40 injects sufficient oxidant in the fluid 30 to enable the catalytic activity in the ASC assembly 24. In addition, the injection of oxidant, via the oxidant injection system 40, regulates a temperature of the fluid 30 entering the ASC assembly 24.

An oxidant injection control unit 44 (e.g., processor-based controller) controls an amount of oxidant injected by the oxidant injection system 40 into the fluid 30 prior to flowing into the inlet 32 of the ASC assembly 24. The oxidant injection control unit 44 includes processing circuitry (e.g., processor 46) and memory circuitry (e.g., memory 48). The processor 46 may include multiple microprocessors, one or more "general-purpose" microprocessors, one or more special-purpose microprocessors, and/or one or more application specific integrated circuits (ASICS), system-on-chip (SoC) device, or some other processor configuration. For example, the processor 46 may include one or more reduced instruction set (RISC) processors or complex instruction set (CISC) processors. The processor 46 may execute instructions to control the amount of oxidant injected by the oxidant injection system 40. These instructions may be encoded in programs or code stored in a tangible non-transitory computer-readable medium (e.g., an optical disc, solid state device, chip, firmware) such as the memory 48. In certain embodiments, the memory 48 may be wholly or partially removable from the oxidant injection control unit 44. The memory 48 may store various LUTs. The memory 28 may store a LUT listing corresponding voltages (e.g., similar to voltage readings received from the RF probes 52) to O₂ storage values representing O₂ storage ratio in the TWC assembly 22. The memory 28 may also store a LUT listing corresponding voltages (e.g., similar to voltage readings received from the RF probes 58) to NH₃ concentration values. Also, the memory 28 may store a number of thresholds or ranges. For example, the memory 28 may store thresholds and/or ranges for various emissions or constituents (e.g., NOₓ, NH₃, etc.) representing desired limits. The memory 28 may also store a temperature operating range (e.g., catalyst operating window) for the ASC catalyst assembly 24. As depicted, the oxidant injection control unit 44 is coupled to the engine control unit 14. In certain embodiments, the engine control unit 14 and/or the oxidant injection control unit 44 may form a single control unit. In certain embodiments, the engine control unit 14 and the oxidant injection control unit 44 may perform some or all of the same functions with regard to the engine 12 and/or the oxidant injection system 40.

The exhaust treatment system 10 includes a plurality of transducers or sensors 50 disposed throughout the system 10 to measure systems parameters (e.g., O₂ storage in the TWC assembly 22, NH₃ concentration in the fluid 30 within the ASC assembly 24, emissions concentration (e.g., NO_{X}) in exhaust gases treated by the exhaust treatment system 10) and to provide feedback (e.g., via signals representative of the system parameters) to the oxidant injection control unit 44 and/or the engine control unit 14. For example, one or more RF probes 52 may be disposed within and/or coupled to the TWC assembly 22 to measure the oxidative state (e.g., O₂ storage) of the TWC assembly 22. In certain embodiments, the O₂ storage measurement from the RF probes 52 may take the form of a voltage reading. In certain embodiments, the voltage reading may be converted to an O₂ storage value by the control units 14, 44 (e.g., utilizing a LUT stored in memory 18, 48). The sensors 50 also include one temperature sensors or transducers 54 disposed downstream of the location 42 of oxidant injection in the fluid conduit 38 and upstream of the inlet 32 of the ASC assembly 24. The sensors 50 further include one or more RF probes 56 disposed within and/or coupled to the ASC assembly 24 to measure a concentration of NH₃ within the fluid 30 within the ASC assembly 24. In certain embodiments, the NH₃ concentration measurement from the RF probes 56 may take the form of a voltage reading. In certain embodiments, the voltage reading may be converted to an NH₃ concentration value by the control units 14, 44 (e.g., utilizing a LUT stored in memory 18, 48). The sensors 50 still further include one or more NO_{X} sensors 58 disposed adjacent or proximal (e.g., downstream of) the outlet 34 of the ASC assembly 24. The one or more NO_{X} sensors 58 measure a concentration of NO_{X} (e.g., in ppm) in the fluid 36.

Based at least on feedback from the sensors 50, the oxidant injection control unit 44 and/or the engine control unit 14 monitor the state or health (e.g., ability to reduce emissions) of the exhaust treatment system 10 and/or components of the system 10 (e.g., oxidant injection system 40, ASC assembly 24, etc.). For example, the control units 14, 44 may run the engine 12 at a rich λ or AFR and utilize the measured O₂ storage (e.g., via RF probe 52) of the TWC assembly 22 to determine the oxidative state of the TWC assembly 22. If the combustion engine is operated under rich enough conditions, the O₂ storage of the TWC assembly 22 should be zero or near zero. If the O₂ storage of the TWC assembly 22 is not near zero, the control units 14, 44 may adjust the operation of the engine 12 to run at a slightly richer λ (e.g., by decreasing the λ by 0.001, 0.002, etc.) or the AFR. If the O₂ storage of the TWC assembly 22 is zero or near zero, the control units 14, 44 may measure a temperature of the fluid 30 (e.g., via temperature sensor 54) prior to flowing into the ASC assembly 24 but downstream of the location 42 of oxidant injection by the oxidant injection system 40. The control units 14, 44 may then determine if the temperature of the fluid 30 adjacent the inlet 32 of the ASC assembly 24 is within a desired temperature operating range or catalyst operating window (e.g., 400-510 °C) to maximize catalytic activity within the ASC assembly 24. If the temperature of the fluid 30 adjacent the inlet 32 of the ASC assembly 24 is not within the desired temperature operating range, the control units 14, 44 may direct the oxidant injection system 40 to inject oxidant or additional oxidant into the fluid 30 to bring the temperature of the fluid 30 to within the desired temperature operating range. If the temperature of the fluid 30 adjacent the ASC assembly 24 is within the desired temperature operating range, the control units 14, 44 may measure a concentration of NOₓ within the fluid 36 exiting the ASC assembly 24. The control units 14, 44 may then determine whether the concentration of NO_{X} (e.g., via NO_{X} sensor 58) in the fluid 36 exiting the ASC assembly 24 is within desired limits (e.g., within a desired range or below a desired threshold). If the concentration of NO_{X} in the fluid 36 exiting the ASC assembly 24 is within the desired limits, the control units 14, 44 may determine the exhaust treatment system is operating at an acceptable state (e.g., complying with desired emissions limits) and that diagnostics do not need to perform on any component of the exhaust treatment system 10.

If the concentration of NO_{X} in the fluid 36 exiting the ASC assembly 24 is not within the desired limits, the control units 14, 44 may measure a concentration of NH; (e.g., via RF probe 56) within the fluid 30 within the ASC assembly 24. The control units 14, 44 may then compare the concentration of NOₓ in the fluid 36 exiting the ASC assembly 24 to a reference value to determine which component of the exhaust treatment system 10 to perform diagnostics on. If the concentration of NH₃ in the fluid 36 within the ASC assembly 24 equals the reference value, the control units 14, 44 may determine to perform diagnostics on the NOₓ sensor 58. If the concentration of NH; in the fluid 36 within the ASC assembly 24 does not equal the reference value, the control units 14, 44 may determine to perform diagnostics on the ASC assembly 24. In certain embodiments, the control units 14, 44 may provide a user perceptible indication (e.g., textual, visual, audible, etc.) of any system parameter not within a desired limit or range, an indication that diagnostics were performed on a specific component of the exhaust treatment system 10, and/or the results of the diagnostics. These series of analyses enable the determination of the state of the exhaust treatment system 10 and/or oxidant injection system 40. Monitoring the health of the oxidant injection system 40 and/or exhaust treatment system 10, via the disclosed techniques, enables operation of the engine 12 to remain within emissions compliance for an extended period of time. In addition, maintenance to components of the exhaust treatment system 10 may be minimized. Further, the disclosed embodiments provide an on-board diagnostics capability.

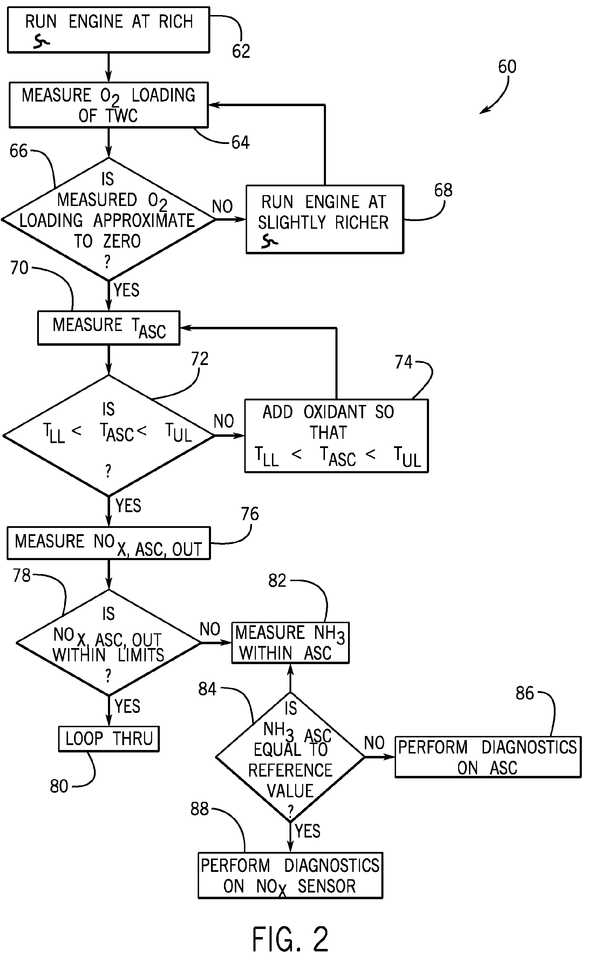

FIG. 2 is a flow chart of an embodiment of a computer-implemented method 60 for monitoring the health of a mid-bed oxidant injection system (e.g., oxidant injection system 40) coupled to the engine 12. All or some of the steps of the method 60 may be executed by the control unit 14 and/or 44 (e.g., utilizing the processor 16 and/or 46 to execute programs and access data stored on the memory 18 and/or 48). In addition, one or more of these steps may be performed simultaneously with other steps. The method 60 includes operating or running the engine 12 at a rich λ (e.g., λ value of less than 1.0 such as approximately 0.999, 0.998, 0.997, 0.996, 0.995, 0.994, 0.993, 0.980, 0.970, 0.960, 0.950, or any other value less than 1.0) or AFR (block 62). The method 60 also includes measuring O₂ loading of the TWC assembly 22 via the one or more RF probes 52 (block 64) to determine the oxidative state of the TWC assembly 22. Upon measuring the O₂ loading, the method 60 includes determining whether the measured O₂ storage is approximately zero (block 66). If the measured O₂ storage is not approximately zero, the method 60 further includes operating or running the engine 12 at a slightly richer λ (e.g., decreasing λ by 0.001, 0.002, etc.) or AFR (block 68) followed by measuring the O₂ loading of the TWC assembly 22 again (block 64). This sequence of steps (blocks 64-68) may be repeated until the measured O₂ storage of the TWC assembly 22 is approximately zero.

Having the measured O₂ storage of the TWC assembly 22 at approximately zero enables the analysis of the state of rest of the exhaust treatment system 10, in particular, those components associated with determining the health or state of the oxidant injection system 40 (e.g., oxidant injection system 40, ASC assembly 24, NOₓ sensor 58, etc.). If the measured O₂ storage of the TWC assembly 22 is at approximately zero, the method 60 includes measuring the temperature of the fluid 30 downstream of the location 42 of oxidant injection in the fluid conduit 38 and upstream of the inlet 32 of the ASC assembly 24 via the one or more temperature sensors 54 (block 70). The method 60 also includes determining whether the temperature of the fluid 30 flowing into the ASC assembly 24, T_{ASC,} is within a desired temperature operating range (e.g., a catalyst operating window) that promotes maximum catalytic activity within the ASC assembly 24 (block 72). The temperature operating range or catalyst operating window may include an upper temperature threshold, T_{UL} (e.g., 400 ° C), and a lower temperature threshold, T_{LL} (e.g., 510 °C). The temperature operating range may be 400 to 510 °C, 400 to 455 °C, 455 to 510° C, 400 to 430 ° C, 480 to 510 ° C, 440 to 480 °C, and all subranges therebetween. If T_{ASC} is not between T_{UL} and T_{LL}, the method 60 includes adding (i.e., injecting) oxidant or additional oxidant into the fluid conduit 38 at the location 42 to adjust T_{ASC} so that it falls between T_{UL} and T_{LL} (block 74). This sequence of steps (blocks 70-74) may be repeated until T_{ASC} is between T_{UL} and T_{LL.}

If T_{ASC} is between T_{UL} and T_{LL,} the method 60 includes measuring the concentration of NO_{X} in the fluid 36 exiting the ASC assembly 24, NO_{X}, _{ASC}, OUT, via the one or more NO_{X} sensors 58 (block 76). The method 60 also includes determining whether the NO_{X}, _{ASC}, OUT falls within desired limits (e.g., below a desired NOₓ threshold and/or within a desired NOₓ range) (block 78). In certain embodiments, these limits may be empirically determined and stored in the memory 18, 48. This step (block 78) determines whether to perform diagnostics on a component of the exhaust treatment system. If the NO_{X}, _{ASC}, OUT falls within the desired limits, the method 60 includes looping thru the method 60 from the beginning (block 80).

If the NO_{X}, _{ASC}, OUT falls without the desired limits, the method 60 includes measuring a concentration of NH; within the fluid 30 within the ASC assembly 24, NH_{3 ASC}, via the one or more RF probes 56 (block 82). The method 60 also includes determining whether NH_{3 ASC} equals a reference value (block 84). This step (block 84) determines which component of the exhaust treatment system 10 to perform diagnostics on. If NH_{3 ASC} does not equal the reference value, the method 60 includes performing diagnostics on the ASC assembly 24 (block 86). If NH_{3 ASC} does equal the reference value, the method 60 includes performing diagnostics on the NOₓ sensor 58 (block 88). In certain embodiments, the method 60 may provide a user perceptible indication (e.g., textual, visual, audible, etc.) of any system parameter not within a desired limit or range, an indication that diagnostics were performed on a specific component of the exhaust treatment system 10, and/or the results of the diagnostics.

Technical effects of the disclosed embodiments include providing (e.g., computer implemented) systems and methods monitoring the health of the oxidant injection system 40 (e.g., mid-bed air injection system) coupled to a series of catalyst assemblies or catalytic converters (e.g., TWC assembly 22 and ASC assembly 24) coupled to the engine 12. In particular, embodiments include analyzing a plurality of system parameters (e.g., O₂ loading of the TWC assembly 22, T_{ASC}, and NO_{X}, _{ASC}, OUT) acquired from a plurality of sensors (e.g., RF probe 52, temperature sensor 54, and NO_{X} sensor 58) to determine whether or not to perform diagnostics on a component of the exhaust treatment system 10. In addition, embodiments include analyzing NH_{3 ASC} within the ASC assembly 24 to determine which component of the exhaust treatment system 10 to perform diagnostics on. Monitoring the health of the oxidant injection system 40 and/or exhaust treatment system 10, via the disclosed embodiments, enables operation of the engine 12 to remain within emissions compliance for an extended period of time. In addition, maintenance to components of the exhaust treatment system 10 may be minimized. Further, the disclosed embodiments provide an on-board diagnostics capability.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system, comprising:
   an exhaust aftertreatment system configured to treat emissions from a combustion engine, wherein the exhaust aftertreatment system comprises:
      a three-way catalyst (TWC) assembly having a first outlet;
      an ammonia slip catalyst (ASC) assembly configured to receive a fluid from the TWC assembly, wherein the ASC assembly has an inlet and a second outlet;
      a fluid conduit disposed between the TWC assembly and the ASC assembly and configured to transfer the fluid from the TWC assembly to the ASC assembly;
      an oxidant injection system coupled to the fluid conduit and configured to inject oxidant into the fluid conduit upstream of the inlet of the ASC assembly to provide sufficient oxidant in the fluid flowing into the inlet of the ASC assembly to enable catalytic activity in the ASC assembly;
      a first radio frequency (RF) probe disposed within the TWC assembly and configured to measure oxygen (O₂) storage of the TWC assembly;
      at least one temperature sensor disposed downstream of a location of oxidant injection into the fluid conduit by the oxidant injection system and upstream of the inlet of the ASC assembly, wherein the at least one temperature sensor is configured to measure a temperature of the fluid adjacent the inlet of the ASC assembly;
      at least one nitrogen oxides (NO_{X}) sensor disposed downstream of the inlet of the ASC assembly and configured to measure a concentration of NO_{X} in the fluid exiting the outlet of the ASC assembly; and
      a controller programmed to receive a first signal representative of a measured O₂ storage of the TWC assembly from the first RF probe, to receive a second signal representative of the temperature of the fluid adjacent the inlet of the ASC assembly, to receive a third signal representative of the concentration of NOₓ in the fluid exiting the ASC assembly, and to determine whether to perform diagnostics on a component of the exhaust aftertreatment system based at least on the first, second, and third signals.
2. The system of clause 1, wherein the controller is programmed to determine an oxidation state of the TWC assembly based on the measured O₂ storage.
3. The system of any preceding clause, wherein the controller is programmed to determine whether the measured O₂ storage is approximately zero.
4. The system of any preceding clause, wherein the controller is programmed to decrease an air to fuel ratio the combustion engine is operating at if the measured O₂ storage is greater than zero.
5. The system of any preceding clause, wherein the controller is programmed to determine whether the temperature of the fluid flowing into the ASC assembly is within a desired temperature operating range if the measured O₂ storage is approximately zero.
6. The system of any preceding clause, wherein the controller is programmed to control the oxidant injection system to inject oxidant or additional oxidant into fluid conduit to adjust the temperature of the fluid flowing into the ASC assembly so that the temperature is within the desired temperature operating range if the temperature of the fluid flowing into the ASC assembly is not within the desired temperature operating range.
7. The system of any preceding clause, wherein the controller is programmed to determine whether the concentration of NOₓ in the fluid exiting the outlet of the ASC assembly is within desired limits if the temperature of the fluid flowing into the ASC assembly is within the desired temperature operating range.
8. The system of any preceding clause, wherein the controller is programmed to perform diagnostics on the component of the exhaust aftertreatment system if the concentration of NO_{X} in the fluid exiting the outlet of the ASC assembly is not within desired limits.
9. The system of any preceding clause, comprising a second RF probe disposed within the ASC assembly and configured to measure a concentration of ammonia (NH₃) in the fluid within the ASC assembly.
10. The system of any preceding clause, wherein the controller is programmed to receive a fourth signal representative of the concentration of NH; in the fluid within the ASC assembly, and to determine if the concentration of NH₃ is equal to a reference value.
11. The system of any preceding clause, wherein the controller is programmed to perform diagnostics on the ASC assembly if the concentration of NH; is not equal to the reference value.
12. The system of any preceding clause, wherein the controller is programmed to perform diagnostics on the at least one NO_{X} sensor if the concentration of NH₃ is equal to the reference value.
13. The system of any preceding clause, comprising the combustion engine coupled to the exhaust aftertreatment system.
14. A system, comprising:
   a controller programmed to determine an operational state of an exhaust aftertreatment system coupled to a combustion engine, wherein the exhaust aftertreatment system comprises a three-way catalyst (TWC) assembly fluidly coupled to an ammonia slip catalyst (ASC) assembly located downstream of the TWC assembly, and wherein the controller is programmed to determine an oxidation state of the TWC assembly of the exhaust aftertreatment system based on a first signal
   representative of a measured oxygen (O₂) storage of the TWC assembly received from a first radio frequency (RF) probe disposed within the TWC assembly, to determine whether a temperature of a fluid flowing into the ASC assembly is within a desired temperature operating range based on a second signal representative of the temperature of the fluid adjacent an inlet of the ASC assembly received from a temperature sensor, to determine whether a concentration of NOₓ in the fluid exiting an outlet of the ASC assembly is within desired limits based on a third signal representative of the concentration of nitrogen oxides (NO_{X}) in the fluid exiting the ASC assembly received from a NO_{X} sensor, and to determine whether to perform diagnostics on a component of the exhaust aftertreatment system based at least on the first, second, and third signals.
15. The system of any preceding clause, wherein the controller is programmed to determine whether the temperature of the fluid flowing into the ASC assembly is within the desired temperature operating range if the measured O₂ storage is approximately zero.
16. The system of any preceding clause, wherein the controller is programmed to determine whether the concentration of NOₓ in the fluid exiting the outlet of the ASC assembly is within desired limits if the temperature of the fluid flowing into the ASC assembly is within the desired temperature operating range.
17. The system of any preceding clause, wherein the controller is programmed to perform diagnostics on the component of the exhaust aftertreatment system if the concentration of NOₓ in the fluid exiting the outlet of the ASC assembly is not within desired limits.
18. The system of any preceding clause, wherein the controller is programmed to determine if a concentration of ammonia (NH₃) in the fluid within the ASC assembly is equal to a reference value based on a fourth signal representative of the concentration of NH; in the fluid within the ASC assembly received from a second RF probe disposed within the ASC assembly.
19. The system of any preceding clause, wherein the controller is programmed to perform diagnostics on the ASC assembly if the concentration of NH; is not equal to the reference value, and to perform diagnostics on the NOₓ sensor if the concentration of NH; is equal to the reference value.
20. A method for monitoring an operational state of an exhaust aftertreatment system coupled to a combustion engine, wherein the exhaust aftertreatment system comprises a three-way catalyst (TWC) assembly fluidly coupled to an ammonia slip catalyst (ASC) assembly located downstream of the TWC assembly, comprising:
   receiving, at a controller, a first signal representative of a measured oxygen (O₂) storage of the TWC assembly from a first radio frequency (RF) probe disposed within the TWC assembly;
   receiving, at the controller, a second signal representative of a temperature of a fluid flowing into an inlet of the ASC assembly from a temperature sensor;
   receiving, at the controller, a third signal representative of a concentration of nitrogen oxides (NOₓ) in the fluid exiting the ASC assembly from a NOₓ sensor;
   determining, via the controller, whether to perform diagnostics on a component of the exhaust aftertreatment system based at least on the first, second, and third signals; and
   receiving, at the controller, a fourth signal representative of a concentration of ammonia (NH₃) in the fluid within the ASC assembly; and
   if the controller determines to perform diagnostics on the component, determining, via the controller, the component of the exhaust aftertreatment system to perform diagnostics on based on the fourth signal.

## Claims

1. A system (10), comprising:
an exhaust aftertreatment system configured to treat emissions from a combustion engine, wherein the exhaust aftertreatment system comprises:
a three-way catalyst (TWC) assembly (22) having a first outlet;
an ammonia slip catalyst (ASC) assembly (24) configured to receive a fluid from the TWC assembly, wherein the ASC assembly has an inlet and a second outlet;
a fluid conduit disposed (30) between the TWC assembly and the ASC assembly and configured to transfer the fluid from the TWC assembly to the ASC assembly;
an oxidant injection system (40) coupled to the fluid conduit and configured to inject oxidant into the fluid conduit upstream of the inlet of the ASC
assembly to provide sufficient oxidant in the fluid flowing into the inlet of the ASC assembly to enable catalytic activity in the ASC assembly;
a first radio frequency (RF) probe (50) disposed within the TWC assembly and configured to measure oxygen (O₂) storage of the TWC assembly;
at least one temperature sensor disposed downstream of a location of oxidant injection into the fluid conduit by the oxidant injection system and upstream of the inlet of the ASC assembly, wherein the at least one temperature sensor is configured to measure a temperature of the fluid adjacent the inlet of the ASC assembly;
at least one nitrogen oxides (NO_{X}) sensor disposed downstream of the inlet of the ASC assembly and configured to measure a concentration of NO_{X} in the fluid exiting the outlet of the ASC assembly; and
a controller (14) programmed to receive a first signal representative of a measured O₂ storage of the TWC assembly from the first RF probe, to receive a second signal representative of the temperature of the fluid adjacent the inlet of the ASC assembly, to receive a third signal representative of the concentration of NO_{X} in the fluid exiting the ASC assembly, and to determine whether to perform diagnostics on a component of the exhaust aftertreatment system based at least on the first, second, and third signals.

2. The system (10) of claim 1, wherein the controller (14) is programmed to determine an oxidation state of the TWC assembly based on the measured O₂ storage.

3. The system (10) of any preceding claim, wherein the controller (14) is programmed to determine whether the measured O₂ storage is approximately zero.

4. The system (10) of any preceding claim, wherein the controller (14) is programmed to decrease an air to fuel ratio the combustion engine is operating at if the measured O₂ storage is greater than zero.

5. The system (10) of any preceding claim, wherein the controller (14) is programmed to determine whether the temperature of the fluid flowing into the ASC assembly is within a desired temperature operating range if the measured O₂ storage is approximately zero.

6. The system (10) of any preceding claim, wherein the controller (14) is programmed to control the oxidant injection system to inject oxidant or additional oxidant into fluid conduit to adjust the temperature of the fluid flowing into the ASC assembly so that the temperature is within the desired temperature operating range if the temperature of the fluid flowing into the ASC assembly is not within the desired temperature operating range.

7. The system (10) of any preceding claim, wherein the controller (14) is programmed to determine whether the concentration of NOₓ in the fluid exiting the outlet of the ASC assembly is within desired limits if the temperature of the fluid flowing into the ASC assembly is within the desired temperature operating range.

8. The system (10) of any preceding claim, wherein the controller (14) is programmed to perform diagnostics on the component of the exhaust aftertreatment system if the concentration of NO_{X} in the fluid exiting the outlet of the ASC assembly is not within desired limits.

9. The system (10) of any preceding claim, comprising a second RF probe disposed within the ASC assembly and configured to measure a concentration of ammonia (NH₃) in the fluid within the ASC assembly.

10. The system (10) of any preceding claim, wherein the controller (14) is programmed to receive a fourth signal representative of the concentration of NH; in the fluid within the ASC assembly, and to determine if the concentration of NH; is equal to a reference value.

11. The system (10) of any preceding claim, wherein the controller (14) is programmed to perform diagnostics on the ASC assembly if the concentration of NH; is not equal to the reference value.

12. The system (10) of any preceding claim, wherein the controller (14) is programmed to perform diagnostics on the at least one NOₓ sensor if the concentration of NH; is equal to the reference value.

13. The system (10) of any preceding claim, comprising the combustion engine coupled to the exhaust aftertreatment system.

14. A method (60) for monitoring an operational state of an exhaust aftertreatment system coupled to a combustion engine (12), wherein the exhaust aftertreatment system comprises a three-way catalyst (TWC) assembly (22) fluidly coupled to an ammonia slip catalyst (ASC) assembly (24) located downstream of the TWC assembly, comprising:
receiving, at a controller (14), a first signal representative of a measured oxygen (O₂) storage of the TWC assembly from a first radio frequency (RF) probe disposed within the TWC assembly;
receiving, at the controller (14), a second signal representative of a temperature of a fluid flowing into an inlet of the ASC assembly from a temperature sensor;
receiving, at the controller (14), a third signal representative of a concentration of nitrogen oxides (NOₓ) in the fluid exiting the ASC assembly from a NOₓ sensor;
determining, via the controller (14), whether to perform diagnostics on a component of the exhaust aftertreatment system based at least on the first, second, and third signals; and
receiving, at the controller (14), a fourth signal representative of a concentration of ammonia (NH₃) in the fluid within the ASC assembly; and
if the controller (14) determines to perform diagnostics on the component, determining, via the controller, the component of the exhaust aftertreatment system to perform diagnostics on based on the fourth signal.
